(19) Europäisches Patentamt / European Patent Office / Office européen des brevets

(11) **EP 3 967 721 A1**

(12) **EUROPEAN PATENT APPLICATION**

(43) Date of publication:
**16.03.2022 Bulletin 2022/11**

(21) Application number: **20306008.2**

(22) Date of filing: **10.09.2020**

(51) International Patent Classification (IPC):
**C08K 5/01** (2006.01)   **H01B 3/22** (2006.01)
**C08L 25/08** (2006.01)   **C08L 9/06** (2006.01)
**H01B 9/02** (2006.01)

(52) Cooperative Patent Classification (CPC):
(C-Sets available)
**H01B 3/22; C08K 5/01**                    (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nexans**
**92400 Courbevoie (FR)**

(72) Inventor: **OUREN, Steinar**
**1784 HALDEN (NO)**

(74) Representative: **Ipsilon**
**Le Centralis**
**63, avenue du Général Leclerc**
**92340 Bourg-la-Reine (FR)**

(54) **IMPREGNATING FLUID FOR HIGH VOLTAGE PAPER LAPPED POWER CABLES**

(57)    The present invention relates generally to dielectric fluids for electrical cables, especially for high voltage direct current (HVDC) power cables, comprising an insulation of a plurality of permeable tapes impregnated with the dielectric fluid.

Fig. 2

(52) Cooperative Patent Classification (CPC): (Cont.)

C-Sets
**C08K 5/01, C08L 9/06;**
**C08K 5/01, C08L 25/08**

**Description**

FIELD OF THE INVENTION:

The present invention relates generally to dielectric fluids for electrical cables, especially for high voltage direct current (HVDC) power cables, comprising an insulation of a plurality of permeable tapes impregnated with the dielectric fluid.

BACKGROUND

A typical direct current (DC) high voltage transmission cable includes a conductor and an insulation system comprising a plurality of layers, such as an inner semi-conductive shield, an insulation body and an outer semi-conductive shield. The cable is also completed with casing, reinforcement, etc., to withstand water penetration and any mechanical wear or forces during production, installation and use. DC cable systems may be for submarine crossings or the land cables.

The insulation body is typically a wound body comprising an essentially all paper tape, i.e. a tape based on paper or cellulose fibers, but application of laminated tape materials, i.e. tape made of at least two layers adhered to each other, such as a laminated polypropylene paper tape (PPLP), can be used as well. The wound body is typically impregnated with an electric insulation oil or a mass.

The document WO 99/33068 (ASEA) describes a DC cable having at least one conductor and an electrically insulating layer impregnated with a dielectric fluid. The dielectric fluid comprises an oil and a gelling additive, wherein this gelling additive determines the viscosity and elasticity of the dielectric fluid.

The cable thus, in its impregnated insulating layer, comprises a dielectric fluid (i.e. oil plus elastomeric gelling additive) with a sufficiently low viscosity at the (higher) impregnation temperature to ensure stable flow properties and flow behavior of this fluid, with a sufficiently high viscosity and elasticity at the (lower) operating temperature of the cable to ensure retention of the oil in the insulating layer, and with a sufficiently sharp viscosity increase on going from the impregnating to the operating temperature to enable the use of higher operating temperatures.

According to document WO 99/33068, the gelling additive molecule can be selected among a very large variety of compounds that are characterized by a polar part capable of forming hydrogen bonds, wherein said gelling additive together with an oil form a polymer gel when the gelling additive is a polymer, or an organogel when the gelling additive is a compound which is not a polymer. In the three examples of said document, three gelling additives are respectively used in combination with an unspecified naphthenic mineral oil. However, the association of any gelling additive compound, as defined in WO 99/33068, with any unspecified naphthenic mineral oil does not provide a dielectric fluid with sufficiently stable dielectric properties within the electrically insulating layer. Typically, the described gelling additive and the oil will form a phase separated mixture, either because the gelling additive is not soluble in the oil resulting in a suspension of the additive in the oil, or because the gelling additive and the oil form a phase separated mixture of a gel phase and an oil phase (this is also called 'bleeding').

PCT WO97/04466 also describes an impregnating compound for electric cables. The impregnation fluid has a very steep slope of change of viscosity characteristics, whereby the viscosity being high at temperatures equal and below the maximum cable operating temperature and being low at higher temperatures. However, the application describes a broad range of naphthenic oils and a broad range of a compound B giving the oil the viscoelastic properties without showing any examples.

EP0987718 A1 describes impregnation compound for electrical cables. The impregnation mass comprises a naphthenic oil with a high number of aromatic hydrocarbons 30% to 45% by weight. Disclosed is also a gas absorbing agent is an isomeric mixture of dibenzyltoluene and wherein the impregnation mass comprises from 2-10% by weight isomeric mixture of dibenzyltoluene. The document does not disclose any examples.

EP2254126 A1 discloses an organogel for electrical cable insulating layer comprising an organo gelator selected from urea-based compounds, a mixture of urea-based compounds, amide-based compounds and a mixture of amide-based compounds or mixtures thereof.

PCT WO97/04465 disclose an oil based electrical insulation compound is described comprising mineral oils and an oil soluble polymer being a synthetic hydrocarbonic block-copolymer of polystyrene and synthetic rubber (SEBS) having molecular weights from 50,000- 1,000,000 and wherein the mineral oil has an aromatic content of 5-30 weight %. The documents thus describe a broad range of oils and SEBS and there are no examples. The gas absorbing compound is selected from dodecylbenzene, diarylalkanes, dialkylbenzenes or alkylbenzenes.

T 2015 Impregnating Compound (Dussek Campbell) for example has been used over half a century in the construction of paper insulated high voltage DC submarine cable. However, the operating voltages of today is only up to and including 525 kV.

Sparks caused by electrical discharges in gas or vacuum bubbles (cavities) in the insulating material in high voltage cables is a problem for operating voltages above 600 kV. The compounds used as insulating material in high voltage cables today does not absorb hydrogen gas to a sufficient degree.

The present invention has as its objects to overcome one or more of the disadvantages of the prior art.

SUMMARY OF THE INVENTION

The present inventors have solved the above-mentioned need by providing in a **first aspect** a dielectric fluid for electrical cables wherein the fluid comprises

> a. dielectric hydrogenated naphthenic oil containing 6 % by weight or less aromatic carbons according to ASTM D2140, less than 10% by weight aromatic hydrocarbons according to the IR method and has an Aniline Point from 100°C to 125°C according to ASTM D611 and
> b. a styrene-ethylene-butylene-styrene (SEBS) tri-block elastomer.

In some embodiments according to the first aspect the SEBS elastomer has a dynamic viscosity from 400 mPa.s to 525 mPa.s at 20% and 25°C according to MA 04-3-064 using Brookfield viscometer with 20% neat polymer concentration in Toluene and 25°C using a Brookfield viscometer.

In some embodiments according to the first aspect the SEBS elastomer has an average molecular weight from 70,000 Da to 120,000 Da.

In some embodiments according to the first aspect the naphthenic oil has a kinematic viscosity from 80 cSt to 190 cSt at 40°C according to ASTM D445.

In some embodiments according to the first aspect the naphthenic oil contains from 25% to 45% by weight naphthenic carbon according to ASTM D2140.

In some embodiments according to the first aspect the dielectric fluid further comprises compounds selected from the group comprising antioxidants, metal deactivators and gas absorbing compounds and any mixtures thereof.

In some embodiments the antioxidants are phenol derived antioxidants, such as 2,6-di-tert-butyl-4-methylphenol (BHT), or Irganox type of antioxidants as commercialized by Ciba.

In some embodiments the gas absorbing compound is a low molecular weight polyisobutene with a kinematic viscosity of from 10 cSt to 35 cSt at 100°C according to ASTM D445.

In some embodiments the polybutene has a flash point from 125 °C to 135°C according to ASTM D92.

In some embodiments the polybutene has a molecular weight of 400 Da to 600 Da.

In some embodiments the dielectric fluid according to the first aspect comprises 4-6 % by weight SEBS and 20-30 % by weight polybutene in naphthenic oil.

In one embodiment of the first aspect the naphthenic oil, SEBS and polybutene add up to 100%.

In some embodiments the dielectric fluid according to the first aspect comprises 4-6 % by weight SEBS, 20-30 % by weight polybutene and 0-1% by weight of other compounds selected from antioxidants and metal deactivators and any mixtures thereof in naphthenic oil and wherein the naphthenic oil, SEBS, polybutene and other compounds adds up to 100%.

In some embodiments of the first aspects the dielectric fluid comprises

> a. 63-76% by weight naphthenic oil,
> b. 4-6 % by weight SEBS, and
> c. 20-30 % by weight polybutene

In this aspect the dielectric fluid may comprise from 0-1% by weight other compounds such as antioxidants and metal deactivators and any mixtures thereof.

In some embodiments of the first aspects the dielectric fluid has a gel point at temperatures from 30°C to 40°C and wherein the fluid has a high dynamic viscosity from 600 Pa.s to 1800 Pa.s at 4°C and a low dynamic viscosity from 0.01 Pa.s to 0.05 Pa.s at 120°C as measured by Kinexus Rheometer (Oscillating rheometer) at 0.095 Hz, strain 1% and temperature range from 120°C to 4°C with 1°C per minute.

In a **second aspect** the present invention provides a direct current (DC) power cable comprising the dielectric fluid according to the first aspect and any embodiments thereof.

In some embodiment of the second aspect the DC power cable comprising at least one conductor and an insulating layer impregnated with the dielectric fluid according to the first aspect and any embodiments thereof, said insulating layer surrounding said conductor.

In some embodiment of the second aspect the DC power cable is a high voltage DC (HVDC) transmission cable comprising a first semi-conducting layer surrounding said conductor, an insulating layer impregnated with the dielectric composition according to the first aspect and any embodiments thereof said insulating layer surrounding said first layer , a second semi-conducting layer surrounding said insulating layer , optionally a metallic screen surrounding said semi-conducting layer and a protective sheath surrounding said second layer or said metallic screen.

In some embodiment of the second aspect the insulating layer of the DC power cable is selected from cellulose paper, Kraft paper, PPLP and any mixtures thereof.

In one embodiment according to the second aspect the HVDC power cable has an operating voltage above 600 kV.

The present invention provides a dielectric fluid with other physical properties than today's impregnating compound.

The present invention provides a dielectric fluid having improved dielectric stability as well as improved non-bleeding properties, i.e. the stability of the dielectric fluid that is used to impregnate the electrically insulating layer of an electric cable. The fluid being homogeneous fluids also called "Newtonian" fluids. "Newtonian" fluids at fixed temperature have a certain viscosity that has the same value when measured at any shear rate. As compared to "non-Newtonian fluids" where many of these fluids are slurries of suspended particles in liquid.

The present invention provides a dielectric fluid that shows good dielectric properties with a Tan delta of less than 0.001 at 90°C, such as less than 0.0009 at 90°C, such as less than 0.0008 at 90°C and preferably a Tan delta 0.0007 or less at 90°C.

The present invention provides a dielectric fluid that shows a DC breakdown of 84 kV (IEC 60156). A good breakdown level is due to improved cavitation properties during polarity reversal of cables under cold conditions.

BRIEF DESCRIPTION OF DRAWINGS

    Figure 1: An example of a DC power cable according to the invention (prior art).

    Figure 2: Viscoelastic properties vs. temperature for 4 % G1652M dielectric fluid vs. T2015 measured by Kinexus rheometer.

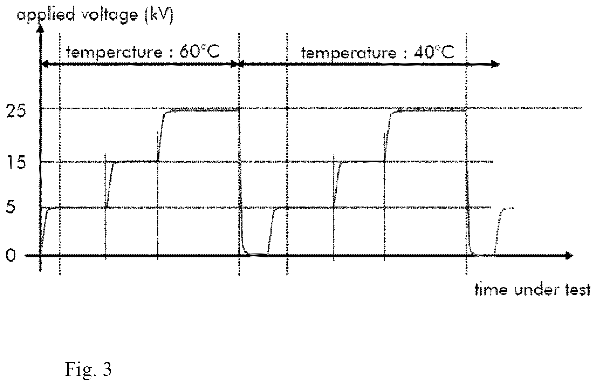

    Figure 3: Depicts experimental procedure for steady-state resistivity measurements.

DETAILED DESCRIPTION

In the following description, various examples and embodiments of the invention are set forth in order to provide the skilled person with a more thorough understanding of the invention. The specific details described in the context of the various embodiments and with reference to the attached drawings are not intended to be construed as limitations.

Where a numeric limit or range is stated, the endpoints are included. Also, all values and subs range within a numerical limit or range are specifically included as if explicitly written out.

As mentioning above, the present inventor has surprisingly found a dielectric fluid for electrical cables wherein the fluid comprises

    a. dielectric hydrogenated naphthenic oil containing 6 % by weight or less aromatic carbons according to ASTM D2140 standard, less than 10% by weight aromatic hydrocarbons according to the IR method and has an Aniline Point from 100°C to 125°C according to ASTM D611 standard and

    b. a styrene-ethylene-butylene-styrene (SEBS) tri-block elastomer wherein the fluid has excellent dielectric properties, the oil does not dissolve the SEBS elastomer thus producing a homogenous fluid that stay homogenous over time and tolerate changes in temperature.

**Definitions:**

*Fluid* according to the invention may be in form of a homogenous liquid, a homogenous semifluid or a homogenous solid stable gel dependent on the temperature of the fluid. The fluid according to the invention may also be defined by an alternative term as a compound.

*A dielectric fluid* according to the invention fluid intended to be used in medium to extra high voltage applications, e.g. transformers, capacitors, high voltage cables such as HVDC power cables, and switchgear and whose function is to provide electrical insulation, suppress corona and arcing, and to serve as a coolant in such electrical application.

*Elastomer* according to the invention is a polymer with viscoelasticity (i.e., both viscosity and elasticity) and has very weak intermolecular forces such as the Styrene- ethylene- butylene- styrene (SEBS) polymer.

*Viscosity* of a fluid is a measure of its resistance to deformation at a given rate. *Dynamic viscosity* (also known as absolute viscosity) is the measurement of the fluid's internal resistance to flow while *kinematic viscosity* refers to the ratio of dynamic viscosity to density.

The SI unit of *dynamic viscosity* is the newton-second per square meter (N·s/m2), also frequently expressed in the equivalent form pascal-second (Pa·s). The CGS unit is the poise. It is commonly expressed, particularly in ASTM standards, as centipoise (cP), because centipoise is equal to the SI millipascal seconds (mPa·s).

The SI unit of *kinematic viscosity* is square meter per second (m$^2$/s), whereas the CGS unit for kinematic viscosity is the stokes. Centistokes (cSt) is often used instead, 1 cSt = 1 mm$^2$·s$^{-1}$ = 10$^{-6}$ m$^2$·s$^{-1}$.

*Gel point* according to the invention and as defined in polymer chemistry, is an abrupt change in the viscosity of a solution containing a polymer. At the gel point, a solution undergoes gelation, leading to a gel formation, as reflected in a loss in fluidity and the formation of a 3D network.

*Transition point* according to the invention is defined as a single point at which different phases of matter are capable of existing together in equilibrium.

*Stiffness* is the extent to which an object resists deformation in response to an applied force.

## Naphthenic oils

In one embodiment according to the invention the dielectric hydrogenated naphthenic oil has a low content of aromatic carbon 6 % by weight or less aromatic carbons according to ASTM D2140 standard and less than 10% by weight aromatic hydrocarbons according to the IR method (Abdul-Halim, A.K. Mohammed and Karim Hankish, Determination of aromatic hydrocarbons in petroleum fractions by infrared spectroscopy, Analyst, 1985, vol. 110, p. 1477-1480)

In a further embodiment according to the invention the dielectric hydrogenated naphthenic oil has an Aniline Point from 100°C to 125°C according to ASTM D611 standard. Aniline point according to the invention is defined as the minimum temperature at which equal volumes of aniline ($C_6H_5NH_2$) and lubricant oil are miscible, i.e. form a single phase upon mixing. Aniline point may be determined by taking equal volumes of aniline and oil and stir continuously in a test tube and heat until the two components merge into a homogeneous solution. Heating is stopped and the tube is allowed to cool. The temperature at which the two phases separate out is recorded as aniline point.

In one further embodiment according to the invention the naphthenic oil contains from 25% to 45% by weight naphthenic carbon according to ASTM D2140 standard.

In one further embodiment according to the invention the naphthenic oil has a kinematic viscosity from 80 cSt to 190 cSt at 40oC according to by ASTM D445 standard. The SI unit of *kinematic viscosity* is square meter per second (m$^2$/s), whereas the CGS unit for kinematic viscosity is the stokes. Centistokes (cSt) is often used instead, 1 cSt = 1 mm$^2$·s$^{-1}$ = 10$^{-6}$ m$^2$·s$^{-1}$.

In one further embodiment according to the invention the naphthenic oil has a flash point above 200°C, preferably from 205°C to 250°C. The flash point of an oil is typically determined by the Pensky Marten (PM) closed cup method ASTM D93 or similar tests such as the ASTM D92.

The naphthenic oils according to the invention may be Nyflex naphthenic oils from Nynas.

## The styrene-ethylene-butylene-styrene (SEBS) tri-block elastomer

In one embodiment the SEBS elastomer has a dynamic viscosity from 400 mPa.s to 525 mPa.s at 20% and 25°C according to Brookfield viscosity method.

In one embodiment the SEBS elastomer has a molecular weight from 70,000 Da to 120,00Da.

The SI unit of *dynamic viscosity* is the newton-second per square meter (N·s/m2), also frequently expressed in the equivalent form pascal-second (Pa·s). The CGS unit is the poise. It is commonly expressed, particularly in ASTM standards, as centipoise (cP), because centipoise is equal to the SI millipascal seconds (mPa·s). Dynamic viscosity may be determined according to MA 04-3-064 with 20% neat polymer concentration in Toluene and 25°C using a Brookfield viscometer. or alternatively measured by Kinexus Rheometer (Oscillating rheometer) at 0.095 Hz, strain 1% and temperature range from 120°C to 4°C with 1°C per minute.

## Polybutene

Sparks caused by electrical discharges in gas or vacuum bubbles (cavities) in the insulating material in high voltage cables is a problem for operating voltages above 600 kV. The compounds used as insulating material in high voltage cables today does not absorb hydrogen gas to a sufficient degree.

The impregnating dielectric fluid must absorb H$_2$ gas during electrical stress. In some embodiments the gas absorbing polymer is polybutene, more preferably a low molecular weight polybutene, with a molecular weight from 400 Da to 600 Da.

In some embodiment the polybutene has a flash point from 125°C to 135°C according to ASTM D92 standard.

The flash point of the polybutene indicates how volatile the compound is.

The polybutene according to the present invention may be Polybut 06, Polybut 09 or Polybut 010 from Kemat.

A dielectric fluid according to the invention comprising from 20% to 30% by weight polybutene shows satisfactory gas absorbing properties.

**The dielectric fluid**

The dielectric fluid comprises in one embodiment a naphthenic oil and a SEBS elastomer.

The dielectric fluid comprises in one embodiment a naphthenic oil and a SEBS elastomer and a gas absorbing polymer polybutene. All components described in detail above.

Contrary to a viscous solution, a fluid in a vial is considered as a gel when inverting the vial does not result in flowing of the fluid on the time scale of seconds or minutes, whereas a very viscous solution will flow slowly in seconds, and a low viscous solution will flow fast immediately.

The dielectric fluid of the invention is preferably macroscopically homogeneous, as opposed to being a mixture having a precipitate (a suspension), or a mixture exhibiting any other type of phase separation, such as a mixture of a gel and a phase separated liquid.

The dielectric fluid is a viscous-elastic solution, implying that it has both elastic (i.e. solid like properties) and viscous (i.e. liquid like properties). The gel point (Tgel) of a SEBS gel is the temperature below which the SEBS gel has a more elastic or solid-like nature, and above which it has a more liquid-like behavior.

The gel point of a SEBS gel can be determined by rheological measurements, or more particular by complex viscosity measurements or by viscoelastic measurements. Rheological measurements are typically performed with a dynamic rheometer in oscillatory mode such as a Brookfield rheometer. The gel point of the present invention is measured under dynamic oscillation of 0.095 Hz.

For example, The SEBS gel is placed in a concentric cylinder cup with a cone inside and cooled from 120°C to 4°C at 0.5 °C/min under dynamic oscillation of 0.095 Hz and under a strain of 1 %. As a function of temperature, rheological parameters such as storage modulus (G', in Pa reflecting the solid-like nature of the gel), loss modulus G", in Pa reflecting the liquid like nature of the gel) and the complex viscosity $\eta^*$ (in Pa.s) can be recorded. The gel point is then defined as the temperature at which the storage modulus G' is equal to the loss modulus G".
The impregnating temperature of the cable and the operating temperature of the cable is preferably higher than the gel point of the applied SEBS gel in the insulation layer.

The gel point of the SEBS gel can be chosen from 30°C to 40°C. This specific gel point range allows for the SEBS gel that gives the impregnated electrically insulating layer of the invention all the advantageous properties as: "Tailormade" for the cable manufacturing process (i.e. the reason for the selected gel point temperature in this invention is due to the lead sheet process in the cable manufacturing process (i.e. after the impregnation and slow cooling process (to avoid cavities in the insulation) in the impregnation vessel the lid of the vessel is opened at approx. 55°C and the heating is turned off when the cable is running through the lead extruder. This lead operation takes approx. 14 days and it is important that the temperature of the gel in the vessel does not cool below the gel point.

Low viscosity at impregnation temperature (10 times lower viscosity than conventional impregnating compound such as T2015. This low viscosity can also result in lower impregnation temperature and then shorter process time in the impregnation process).

The gel point range is sufficient to avoid creation of cavities during polarity reversal which induces a temperature change in the cable and said temperature change can modify the dielectric fluid structure, possible resulting in cavity formation (i.e. small gas bubbles formation). Such cavities can severely increase the chance on a breakdown and failure of the cable.

Typically, the rheological behavior of the dielectric fluid of the invention can be characterized by a "solid" (elastic behavior) from 4°C to approximately 35°C, and a more viscous behavior from 35°C to 120°C. The complex viscosity at 4°C can be about 600 to 1800 Pa.s. At the gel point the, the viscosity can be 50-100 Pa.s, and at 120°C the viscosity can be from 0.01 -0.05 Pa.s.

In one further embodiment the dielectric fluid may comprise a gas absorbing polymer such as polybutene, preferably wherein the polybutene is a low molecular polybutene with a molecular weight of 400g/mol to 600g/mol.

In a preferred embodiment the dielectric fluid comprises 20% to 30% by weight polybutene.

The dielectric fluid may further comprise an antioxidants are phenol derived antioxidants, such as 2,6-di-tert-butyl-4-methylphenol (BHT), or Irganox type of anti-oxidants as commercialized by Ciba.

**The electrically insulating layer and the electrical cable**

As described above, the present invention relates generally to the art of dielectric fluids for electrical cables. In particularly it relates to electric cable comprising an electrically insulating layer impregnated with a dielectric fluid including a SEBS elastomer. More particularly, the electric cable is a direct current transmission cable (DC transmission cable), more preferably a high voltage direct current cable (HVDC transmission cable) comprising insulating layer where the voltage level may be increased to 600 kV and above, such as up to at least 700 kV.

According to the invention, the electrically insulating layer can typically be a porous, fibrous and/or laminated structure, such as tape, based preferably on cellulose or paper fibers.

One understands by "laminated structure" a structure including at least three layers, in which the intermediate layer is based on cellulose or paper fibers and the two other layers are different layers such as atactic polypropylene layers (i.e. polypropylene layers stretched in random direction).

The electrically insulating layer of the invention is impregnated with the dielectric fluid, such that essentially all voids of said electrically insulating layer are filled with the dielectric impregnating fluid.

In a preferred embodiment the insulating layer is a porous and/or fibrous structure (e.g. Kraft paper), or in other terms non-laminated structures.

In a specific embodiment, the electric cable according to the invention can be an electric direct current transmission cable comprising a first semi-conducting layer surrounding said conductor, the insulating layer surrounding said first layer; a second semi-conducting layer surrounding said insulating layer, and a protective sheath surrounding said second layer.

Optionally, a metallic screen can be positioned between the second semi-conductive layer and the protective sheath along the electric cable.

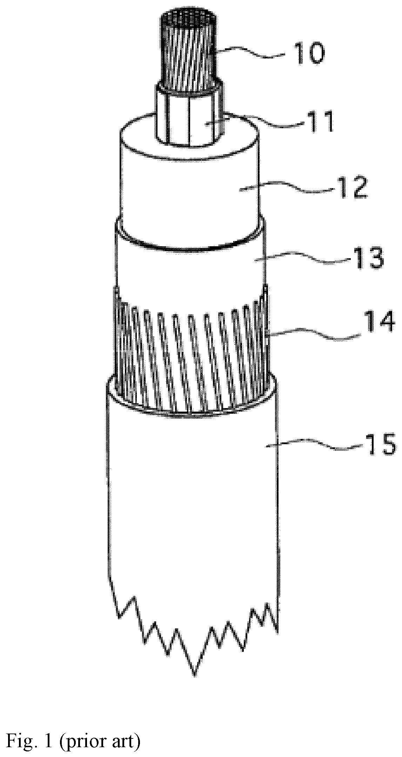

Figure 1 represents a schematic view of an embodiment of a DC cable according to the invention, favorable for use as a cable for transmission of electric power comprising from the center and outwards:

a stranded multi-wire conductor 10;
a first semi-conducting shield 11 disposed around the conductor 10;
a wound and impregnated electrically insulating layer 12 comprising a dielectric fluid according to the invention;
a second semi-conducting shield 13 disposed outside the electrically insulating layer 12;
optionally a metallic screen 14 around the second semi-conducting shield 13; and a protective sheath 15 arranged outside the optional metallic screen 14.

The DC cable can be a single conductor DC cable having a multi-wire core as shown in Figure 1 or a DC cable with two or more conductors. A DC cable comprising two or more conductors can be of any known type with the conductors placed side-by-side in a flat cable arrangement, or in a two-conductor arrangement with one first central conductor surrounded by a concentrically arranged second outer conductor, i.e. a coaxial two-conductor cable.

The dielectric fluid of the invention comprises a SEBS thermo plastic elastomer and a naphthenic oil that both are described in detail above.

Having generally described this invention, a further understanding can be obtained by reference to certain specific examples. The examples illustrate the properties and effects of the of the dielectric fluid according to the invention, and are provided herein for purposes of illustration only, and are not intended to be limiting.

EXAMPLES

**Materials**

*Example of process oils according to the invention*

The process oil is an important part of the gel. Preferred process oils according to the invention are naphthenic mineral process oils due to their favorable dielectrically properties.

Furthermore, the process oil should not dissolve the SEBS gelling agent.

Another important parameter is the aniline point which should not be lower than 100°C. If the aniline point of the oil is lower than 100°C the oil will dissolve the SEBS elastomeric agent, thus providing an unstable gel that will not stay homogenous over time and at different temperatures.

Examples of naphthenic mineral process oils having the above described properties is shown in table 1 below:

*Table 1*

| Process oils | Viscosity, cSt 40°C | Cparaffinic, % D2140 | Cnaphtenic, %, D2140 | Caromatic, %, D2140, | Aniline point, °C, D611 |
|---|---|---|---|---|---|
| Nyflex 3120 | 120 | 67 | 32 | 1 | 122 |

(continued)

| Process oils | Viscosity, cSt 40°C | Cparaffinic, % D2140 | Cnaphtenic, %, D2140 | Caromatic, %, D2140, | Aniline point, °C, D611 |
|---|---|---|---|---|---|
| Nyflex 223 | 84 | 55 | 43 | 2 | 103 |
| Nyflex 3060 | 60 | 60 | 36 | 4 | 103 |
| Nyflex 3185 | 185 | 65 | 29 | 6 | 113 |

The oils referenced in table 1 are commercialized by Nynas. The Nyflex process oils are hydrotreated and highly refined, high viscosity naphthenic oils. Nyflex 3120, 3060 and 3185 is a blend of two process oils, while the Nyflex 223 is a single oil.

*Example of elastomers, according to the invention*

The tri-block structure, Styrene- ethylene-butylene-styrene (SEBS) shown in table 2a and table 2b below are example of SEBS elastomers that are able to solidify naphthenic mineral oils described above and provide strength, enhanced flexibility, and cushioning properties to the impregnation fluid. The SEBS materials may be delivered either in pellets, fluffy crumbs or in powder form. The ratio between the ethylene-butylene and styrene indicates softness of the gel.

*Table 2a: SEBS from Dynasol, Brrookfield viscometer 20% neat polymer concentration in Toluene and 25oC and according to MA-04-3-064.*

| SEBS | Ethylene-butylene/ Styrene ratio | MolecularWeight, Da | Dynamic viscosity, Brookfield, mPa.s |
|---|---|---|---|
| Calprene H 6110 | 70/30 | 77,000 | 470 |
| Calprene H 6180X | 85/15 | 107,000 | 506 |
| Calprene H 6181X | 85/15 | 116,000 | 420 |

*Table 2b: SEBS from Kraton, Brrookfield viscometer 20% neat polymer concentration in Toluene and 25°C and according to BAM 922.*

| SEBS | Ethylene-butylene/Styrene ratio | MolecularWeight, Da | Dynamic viscosity, Brookfield, mPa.s |
|---|---|---|---|
| Kraton G1652 M | 70/30 | 79,000 | 400-525 |

It is important that the dielectric fluid absorb $H_2$ gas during electrical stress.

*Table 3*

| PIB | Viscosity, cSt (ASTMD-445) | MW, g/mol (ASTM D-3536) | Flash point (COC), °C (ASTM D-92) |
|---|---|---|---|
| Polybut 06 | 10.5 | 425 | 130 |
| Polybut 09 | 28 | 500 | 135 |
| Polybut 010 | 35 | 550 | 130 |

**Method for making the dielectric fluid having stable gel properties**

To produce the dielectric fluid according to the invention approx. 4-6 % by weight SEBS, having the above described properties, is added to the naphthenic oil, with the above described properties, and stirred using for example a magnetic stirrer for 2 hours at 120°C.

In an alternative method 20-30% by weight polybutene as described in table 3 above is added to the dielectric fluid comprising the naphthenic oil and the SEBS elastomer and stirred using for example a magnetic stirrer for 2 hours at 120°C. The mixed fluid described above has stable gel properties i.e. it is possible to cool and heat the dielectric fluid without further mixing which is an important property for manufacturing of the DC cable but also during operation of the cable as there are large changes in temperatures.

A dielectric fluid according to the invention should preferably have a gel point from 30°C to 40°C and high dynamic viscosity from 600 Pa.s to 1800 Pa.s at 4°C.

Table 4 below are examples of Naphthenic oils and SEBS fluid compositions having the above described properties.

*Table 4: example of dielectric fluids according to the invention*

| Dielectric fluid | Gel point, °C | Gel strength (Pa.s) |
|---|---|---|
| 4 % H 6181X in Nyflex 3120 | 39 | 683 |
| 4 % G1652M inNyflex 223 | 35 | 2314 |
| 5 % H6180 X in Nyflex 3120 | 33 | 923 |
| 4 % H6181 X in Nyflex 3120 | 39 | 683 |

**Example 1: Gassing of electrical insulating liquids under electrical stress and ionization (IEC 628 METHOD A)**

*Experimental setup*

Gas absorption equipment: AC generator, heating bath and burette with Dibutyl phthalate.
Test parameters:

Voltage: 10 kV AC
Frequency: 50 Hz Temperature: 80°C Gas: $H_2$
Liquid: Dibutyl phthalate

*Results*

*Table 5: Gas absorption results in $mm^3$/min.*

| Sample | B10 | B 120 | G ($mm^3$/min) |
|---|---|---|---|
| T2015 | 12,5 | 12,2 | -0,5 |
| | | | |
| Nyflex 223 | 3,2 | 8,8 | 9 |
| Nyflex 3120 | 5,4 | 10,1 | 8 |
| Nyflex 3185 | 18,8 | 20,7 | 3 |
| | | | |
| Polybut 06 | 13,9 | 8,5 | -10 |
| | | | |
| Nyflex 3120 + 20 % Polybut 06 | 13,6 | 13,2 | -0,7 |
| Nyflex 223 + 20 % Polybut 06 | 14,5 | 15,3 | 1,4 |
| Nyflex 3060 + 20 % Polybut 06 | 11,6 | 10,9 | -1,2 |
| | | | |

(continued)

| Sample | B10 | B 120 | G (mm$^3$/min) |
|---|---|---|---|
| Nyflex 223 + 25 % Polybut 06 | 11,4 | 9,1 | -3,9 |
| B10 - level in the burette 10 min. after start of the experiment<br>B120 - level in the burette after 120 min. of the experiment | | | |

**Example 2: Viscoelastic properties of the dielectric fluid compared to T2015**

Both during the impregnation process of the paper lapped cables and during operation of the HVDC cables there are large shifts in temperatures. Thus, it is important to characterize the viscoelastic properties of the dielectric fluid at different temperatures.

The viscoelastic properties of a dielectric fluid comprising: 4 % G1652M + 25 % Polybut 06 in Nyflex 223 was compared to T 2015.

*Experimental setup*

Temperature sweep:

Instrument: Kinexus pro: Malvern Instruments

Measurement system: Concentric cylinder, CC 25

Oscillation:

Viscosity vs. Temperature Temp.: -10 - 120°C, 1°C/min

Frequency: 0.095 Hz

Strain: 1%

Viscoelastic properties vs. frequency
Frequency stress sweep:

Instrument: Kinexus pro: Malvern Instruments
Measurement system: Concentric cylinder, CC 25

Oscillation

Temp.: 4/120°C
Stress: 100 Pa (4°C)/ 1 Pa (120°C)
Frequency: 10-0.001 Hz

*Results*

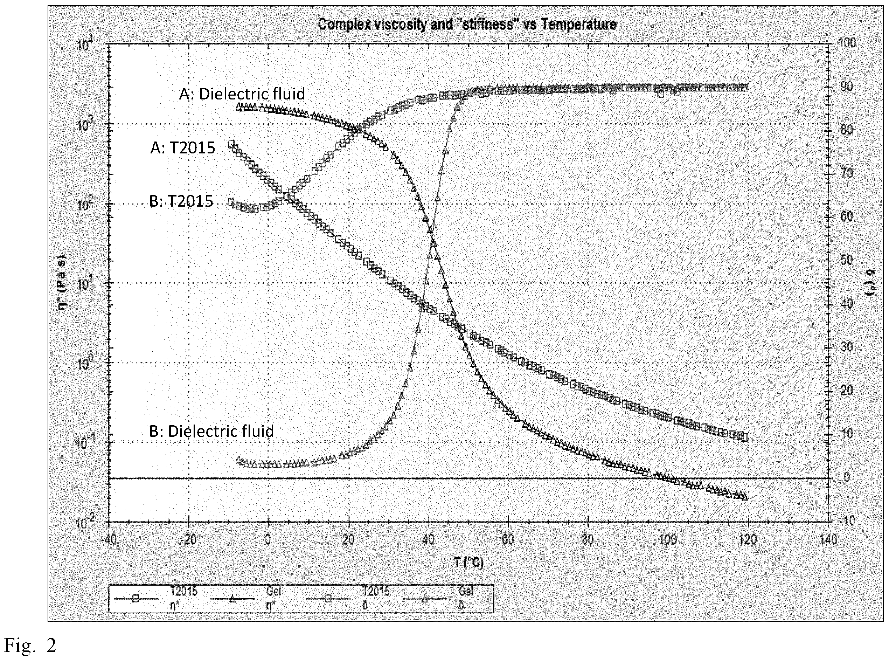

Viscoelastic properties vs. temperature is shown in figure 2.

The figure depicts the viscoelastic properties from minus 10°C to 120°C for the dielectric fluid according to the invention and a standard impregnation fluid T2015 regularly used in HVDC cable today. The dielectric fluid according to the invention (curve A) has lower viscosity than T2015 (curve A) at temperatures above 47°C thus making it possible to run the impregnation process of the paper lapped cables at a lower temperature. The gel point for the dielectric fluid according to the invention is approx. 36°C (from the raw data, not shown), and the Newtonian plateau is 1660 Pa.s. at minus 8°C, as a comparison T2015 that has a viscosity of 295 Pa.s at minus 10°C.

Further, the dielectric fluid according to the invention has a sharp decrease in the "stiffness", i.e. steep slope (curve B) from about 50°C to about 25 °C. "The stiffness" (curve B) for T2015 decrease from 40 °C to 0°C, but the phase degree is only 65 at 0°C for T2015 while the dielectric fluid according to the invention has a phase degree at 3 at 0°C. To explain: A phase degree of 90 is like liquid, 45 is viscoelastic and 0 is like solid.

**Example 3: Resistivity measurements as a function of temperature and electric field strength**

Depicts resistivity measurements on a sample made of several layers of paper impregnated with 4 % SEBS with 25 % PIB in naphthenic oil.

The field and temperature coefficients of resistivity have been extracted. The values are compared to similar samples impregnated with standard T 2015 (Dussek Campbell) impregnation compound.

*Experimental set-up and protocol*

The technique is based upon classical current-voltage measurements. The cell was improved for the purpose of these measurements with a protective resistor, coaxial connector, guard ring and high-profile electrodes. The diameter of the measurement electrode is 78 mm. In addition, after having filled the cell with the gel, the free volume of the cell (at the top) was filled with SF6 (2.5 bars) to avoid any flashover issue along the gel/free volume interface.

The sample under test consist of 5 layers of 70 microns Munksjø MS 160 paper and a layer of 130 microns carbon black paper on each side of the "sandwich". The effective thickness of the sample is then considered to be: 5 x 70 + (2 x 130/2) =480 $\mu$m.

The pressure between electrodes has been applied by means of a 22 kg weight. The drying and impregnation parameters of the insulation paper was 115°C.

The measurement protocol:

- Applied voltage (increasing): 5kV, 15kV, 25kV Applied field=10, 31, 52 kV/mm
- Temperature (increasing): 22 °C, 40 °C and 60°C

The voltage steps are applied as long as required to reach a stable current value which can be considered as the conductibility current. A stable current was obtained within 24 hours in all cases.

Resistivity is modelled according to the following well-known exponential law:

$$\rho = \rho_0 \exp\left[-(\alpha T + \beta E)\right]$$

The coefficients are reached by plotting the resistivity as a function off applied electric field and temperature.

*Results*

From the measurements from 22 °C to 60°C and 10kV to 52 kV/mm the scatter of the resistivity values depending on electric field and temperature can be expressed as follows:

$$\rho[\Omega \cdot m] = (7.87 \pm 1.4)10^{16}\exp\{[-(0.124 \pm 0.005).T[^{\circ}C] - (0.048 \pm 0.012).E[kV/mm]\}$$

Table 6 below summaries the main resistivity parameters as extracted from the experimental curves (the curves are not shown)

*Table 6 Summarize the main resistivity parameters as extracted from the experimental curves*

|  | T 2015 | 4 % G1652M gel |
|---|---|---|
| $\alpha$ (°C$^{-1}$) | 0.12 | 0.12 |
| $\beta$ (mm/kV) | 0.036 | 0.048 |
| $\rho_0$ ($\Omega$·m) | 4.8 10$^{16}$ | 7.87 10$^{16}$ |

The results shown in table 6 indicates that the dielectric fluid according to the invention has similar or even slightly better magnitude of resistivity compared to the standard T2015 fluid. The field coefficients are also better to the ones obtained for T2015, i.e. the resulting resistive field distribution in steady state is smoother (i.e. same $\alpha$ but higher $\beta$) for the dielectric fluid according to the invention. Thus, indicating that the dielectric fluid according to the invention can be used as an impregnating fluid in a paper lapped power cable.

Table 7 summarizes some of the major properties of the dielectric fluid according to the invention compared to T2015 standard impregnation fluid.

*Table 7: Comparison of T 2015 vs. 4 % G1652M + 25 % Polybut 06 in Nyflex 223.*

| Sample | Tan delta. 90°C | DC breakdown, kV (IEC 156) | Coefficient of expansion, 1/K | Gel point, °C coolin g/ heating | Viscosity, Pa.s 4/120 °C |
|---|---|---|---|---|---|
| 4 % G1652M | 0.0007 | 84 | 0.974790661 | 36/39 | 1400/0.02 |
| T 2015 | < 0.0020 | 92 | <0.0007 | - | 135/0.11 |

## Claims

1. A dielectric fluid for electrical cables, **characterized in that** the fluid comprises

    a. dielectric hydrogenated naphthenic oil containing 6 % by weight or less aromatic carbons according to ASTM D2140, less than 10% by weight aromatic hydrocarbons according to the IR method and has an Aniline Point from 100°C to 125°C according to ASTM D611 and
    b. a styrene-ethylene-butylene-styrene (SEBS) tri-block elastomer.

2. The dielectric fluid according to claim 1 wherein the SEBS elastomer has a dynamic viscosity from 400 mPa.s to 525 mPa.s at 20% neat polymer concentration in Toluene and 25°C using a Brookfield viscometer.

3. The dielectric fluid according to claim 1 or claim 2, wherein the SEBS elastomer has an average molecular weight from 50.000 Da to 120.000 Da.

4. The dielectric fluid according to any one of claims 1 to 3, wherein the naphthenic oil has a kinematic viscosity from 80 cSt to 190 cSt at 40°C according to ASTM D445.

5. The dielectric fluid according to any one of claims 1 to 4, wherein the fluid further comprises a compound selected from the group comprising antioxidants, metal deactivators and gas absorbing compounds and any mixtures thereof.

6. The dielectric fluid according to claim 5, wherein the gas absorbing compound is a low molecular weight polybutene with a kinematic viscosity of from 10 cSt to 35 cSt at 100°C according to ASTM D445.

7. The dielectric fluid according to claim 5 or claim 6, wherein the polybutene has a flash point from 125°C to 135°C according to ASTM D92.

8. The dielectric fluid according to claim 6 or claim 7, wherein the polybutene has a molecular weight of 400 Da to 600 Da.

9. The dielectric fluid according to any one of claims 5 to 8 wherein the fluid comprises 4-6 % by weight SEBS and 20-30 % by weight polybutene in naphthenic oil.

10. The dielectric fluid according to any one of claims 1 to 9 wherein the dielectric fluid has a gel point at temperatures from 30°C to 40°C and wherein the fluid has a high dynamic viscosity from 600 Pa.s to 1800 Pa.s at 4°C and a low dynamic viscosity from 0.01 Pa.s to 0.05 Pa.s at 120°C using Kinexus rheometer.

11. A direct current (DC) power cable comprising the dielectric fluid according to any one of claims 1 to 10.

12. The DC power cable according to claim 11 wherein the DC power cable comprising at least one conductor (10) and an insulating layer (12) impregnated with the dielectric fluid according to any one of claims 1 to 10, said insulating layer (12) surrounding said conductor (10).

13. The DC power cable according to claim 11 or claim 12, wherein the DC power cable is a high voltage DC (HVDC) transmission cable comprising a first semi-conducting layer (11) surrounding said conductor (10), an insulating layer (12) impregnated with the dielectric composition according to any one of claims 1 to 10 said insulating layer (12) surrounding said first layer (11), a second semi-conducting layer (13) surrounding said insulating layer (12), optionally a metallic screen (14) surrounding said semi-conducting layer (13) and a protective sheath (15) surrounding said second layer (13) or said metallic screen (14).

14. The DC power cable according to any one of claims 11 to 13 wherein the insulating layer is selected from cellulose paper, Kraft paper, PPLP and any mixtures thereof.

15. The DC power cable according to any one of claims 11 to 14 wherein the operating voltage level of the cable is above 600 kV.

Fig. 1 (prior art)

Fig. 2

Fig. 3

Europäisches
Patentamt

European
Patent Office

Office européen
des brevets

# EUROPEAN SEARCH REPORT

Application Number

EP 20 30 6008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 231 402 A1 (SHELL OIL CO [US]; MITSUI PETROCHEMICAL IND [JP]) 12 August 1987 (1987-08-12) * page 2 - page 3; claims 1-6; examples 1-3 * | 1-15 | INV. C08K5/01 H01B3/22 C08L25/08 C08L9/06 H01B9/02 |
| X,D | WO 97/04465 A1 (NORSK HYDRO AS [NO]; PETTERSEN JARL MARKUS [NO] ET AL.) 6 February 1997 (1997-02-06) * page 1 - page 8; claims 1-10; figures 1-5; examples 1-4 * | 1-15 | |
| X | SE 1 651 576 A1 (ABB SCHWEIZ AG [CH]) 1 December 2016 (2016-12-01) | 1-5, 10-15 | |
| A | * page 1 - page 12; claims 1-16; figure 3; table 1 * | 6-9 | |
| X,D | EP 0 987 718 A1 (CIT ALCATEL [FR]) 22 March 2000 (2000-03-22) * paragraph [0001] - paragraph [0038]; claims 1-14; examples A-E * | 1-15 | |

TECHNICAL FIELDS
SEARCHED    (IPC)

C08K
H01B
C08L

The present search report has been drawn up for all claims

| Place of search | Date of completion of the search | Examiner |
|---|---|---|
| Munich | 2 March 2021 | Marsitzky, Dirk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 6008

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2021

| Patent document cited in search report | | Publication date | Patent family member(s) | | Publication date |
|---|---|---|---|---|---|
| EP 0231402 | A1 | 12-08-1987 | AT | 59114 T | 15-12-1990 |
| | | | AU | 579213 B2 | 17-11-1988 |
| | | | EP | 0231402 A1 | 12-08-1987 |
| WO 9704465 | A1 | 06-02-1997 | AU | 6535896 A | 18-02-1997 |
| | | | WO | 9704465 A1 | 06-02-1997 |
| SE 1651576 | A1 | 01-12-2016 | NONE | | |
| EP 0987718 | A1 | 22-03-2000 | EP | 0987718 A1 | 22-03-2000 |
| | | | JP | 2000090750 A | 31-03-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9933068 A
- WO 9704466 A
- EP 0987718 A1
- EP 2254126 A1
- WO 9704465 A

**Non-patent literature cited in the description**

- **ABDUL-HALIM ; A.K. MOHAMMED ; KARIM HANKISH.** Determination of aromatic hydrocarbons in petroleum fractions by infrared spectroscopy. *Analyst,* 1985, vol. 110, 1477-1480